# FASCICULE DE BREVET EUROPEEN

(11) **EP 4 185 483 B1**
(45) Date de publication et mention de la délivrance du brevet: **04.09.2024**
(21) Numéro de dépôt: 21740164.5
(22) Date de dépôt: 23.06.2021
(51) Int. Cl.: B60K 7/00, B60K 17/04, F16H 1/22

(54) **DISPOSITIF DE TRANSMISSION ET ENGIN ROULANT ÉQUIPÉ D'UN TEL DISPOSITIF DE TRANSMISSION**
GETRIEBEVORRICHTUNG UND ROLLENDE MASCHINE MIT EINER SOLCHEN GETRIEBEVORRICHTUNG
TRANSMISSION DEVICE AND ROLLING MACHINE EQUIPPED WITH SUCH A TRANSMISSION DEVICE

(30) Priorité: 21.07.2020 FR 2007662
(43) Date de publication de la demande: 31.05.2023
(73) Titulaire: France Reducteurs, 85500 Les Herbiers (FR)
(72) Inventeur: BRAY, Sébastien, 85590 LES EPESSES (FR); GUIROULT, Fabien, 85480 SAINT HILAIRE DE VOUHIS (FR)
(74) Mandataire: Ipsilon
(86) Numéro de dépôt international: PCT/FR2021/051145
(87) Numéro de publication internationale: WO 2022/018334

(56) Documents cités:
- EP-A1- 2 332 760
- EP-A1- 3 284 972
- CN-A- 110 239 326
- FR-A1- 3 053 007
- US-A1- 2011 139 522

## Description

La présente invention concerne un dispositif de transmission notamment pour l'entraînement en rotation de roues d'un engin roulant ainsi qu'un engin roulant équipé d'un tel dispositif de transmission.

Elle concerne en particulier un dispositif de transmission comprenant un boîtier, deux moteurs électriques disposés à l'extérieur du boîtier et équipés chacun d'un arbre moteur faisant saillie à l'intérieur du boîtier, un arbre de sortie formé d'au moins deux sections d'arbre coaxiales et montées libres en rotation l'une par rapport à l'autre, un mécanisme de transmission de mouvement configuré pour transmettre le mouvement de rotation de l'un des arbres moteurs à l'une des sections d'arbre de l'arbre de sortie et le mouvement de rotation de l'autre des arbres moteurs à l'autre ou une autre des sections d'arbre de l'arbre de sortie, le mécanisme de transmission et l'arbre de sortie étant logés au moins partiellement à l'intérieur du boîtier.

Un tel dispositif de transmission est connu comme l'illustre le brevet FR-3.053.007. Un tel dispositif de transmission s'applique plus particulièrement aux véhicules utilitaires en particulier aux véhicules de tonte à rayon de braquage nul encore appelés véhicules ZT pour zéro turn. La présence de deux moteurs électriques et la réalisation d'un arbre de sortie en au moins deux sections permettent de disposer d'un engin avec deux roues motrices qui peuvent être entrainées en rotation à des vitesses et dans des sens différents. La direction de l'engin peut ainsi s'opérer par simple changement de la vitesse de rotation des roues. En pratique, un tel engin est souvent équipé de deux leviers de commande qui commandent chacun un moteur. Quand les deux leviers sont poussés vers l'avant simultanément et avec la même force, l'engin se déplace vers l'avant. Quand les deux leviers sont poussés vers l'arrière simultanément et avec la même force, l'engin se déplace vers l'arrière et quand un levier est poussé plus que l'autre, l'engin effectue un virage. Le fait de pousser l'un des leviers vers l'avant et l'autre vers l'arrière permet de faire tourner l'engin sur lui-même. Un dispositif de transmission pour un tel engin se caractérise par son poids, son encombrement et sa complexité. On est donc à la recherche permanente de solutions permettant de limiter l'encombrement d'un tel dispositif de transmission et de réduire son poids.

Un but de l'invention est de proposer un dispositif de transmission du type précité dont la conception permet de réduire le poids dudit dispositif sans nuire à sa résistance mécanique et à son fonctionnement.

A cet effet, l'invention a pour objet un dispositif de transmission notamment pour l'entraînement en rotation de roues d'un engin roulant, ledit dispositif comprenant un boîtier, deux moteurs électriques disposés à l'extérieur du boîtier et équipés chacun d'un arbre moteur faisant au moins partiellement saillie à l'intérieur du boîtier, un arbre de sortie formé d'au moins deux sections d'arbre coaxiales et montées libres en rotation l'une par rapport à l'autre, un mécanisme de transmission de mouvement configuré pour transmettre le mouvement de rotation de l'un des arbres moteurs à l'une des sections d'arbre de l'arbre de sortie et le mouvement de rotation de l'autre des arbres moteurs à l'autre ou une autre des sections d'arbre de l'arbre de sortie, le mécanisme de transmission et l'arbre de sortie étant logés au moins partiellement à l'intérieur du boîtier, le boîtier étant au moins partiellement en matière de synthèse, caractérisé en ce que les moteurs sont reliés entre eux par au moins un élément de liaison rapporté et s'étendant d'un moteur à l'autre pour former un pont de liaison entre lesdits moteurs et en ce que le dispositif de transmission comprend au moins une butée de limitation en déplacement en rotation de l'ensemble formé par les moteurs et le ou les éléments de liaison autour d'un axe parallèle à au moins l'un des arbres moteurs. La présence d'un ou plusieurs éléments de liaison distincts du boîtier et formant pont entre les moteurs permet d'éviter ou de limiter la fixation des moteurs au boîtier tout en garantissant un respect du parallélisme des arbres moteurs.

Selon un mode de réalisation de l'invention, la ou au moins l'une des butées est formée par au moins une partie du boîtier contre laquelle le ou au moins l'un des éléments de liaison est apte à prendre appui. Il en résulte une simplicité de construction.

Selon un mode de réalisation de l'invention, le boîtier est muni d'un ou plusieurs passages traversants aptes à être traversés par le ou au moins l'un des éléments de liaison et la ou au moins l'une des butées est formée par au moins une partie d'une surface de délimitation du ou d'au moins l'un des passages.

Selon un mode de réalisation de l'invention, le ou au moins l'un des éléments de liaison affecte la forme d'une tige de liaison. Les moteurs disposés à l'extérieur du boîtier restent aisément démontables du fait de la conception du ou des éléments de liaison. La maintenance est donc aisée.

Selon un mode de réalisation de l'invention, les arbres moteurs sont coaxiaux ou parallèles entre eux. Le ou les éléments de liaison permettent un maintien de cette coaxialité ou de ce parallélisme.

Selon un mode de réalisation de l'invention, le mécanisme de transmission de mouvement est un mécanisme de transmission de mouvement par engrenage. Cette conception assure une fiabilité et une simplicité de la transmission de mouvement.

Selon un mode de réalisation de l'invention, le mécanisme de transmission de mouvement comprend un arbre dit intermédiaire sectionné présentant un premier tronçon auquel le mouvement de rotation de l'un des arbres moteurs est apte à être transmis et un deuxième tronçon auquel le mouvement de rotation de l'autre desdits arbres moteurs est apte à être transmis et le boîtier comprend, au niveau de chaque arbre moteur, logée à l'intérieur du boîtier, une pièce munie d'au moins deux ouvertures formant l'une, un palier support dudit arbre moteur, l'autre un palier support de l'un des tronçons de l'arbre intermédiaire sectionné du mécanisme de transmission de mouvement. La présence au niveau de chaque arbre moteur d'une pièce avec deux ouvertures permet d'accroître la précision du positionnement des arbres moteurs par rapport au mécanisme de transmission de mouvement équipant le boîtier.

Selon un mode de réalisation de l'invention, le premier tronçon et le deuxième tronçon de l'arbre intermédiaire sont configurés chacun pour transmettre directement ou via au moins une section d'un arbre intermédiaire supplémentaire sectionné leur mouvement de rotation à l'une des sections d'arbre de l'arbre de sortie.

Selon un mode de réalisation de l'invention, le dispositif comprend un dispositif de freinage logé à l'intérieur du boîtier et monté sur un arbre rotatif. Un tel dispositif de freinage peut permettre un freinage simultané des sections d'arbre ou d'au moins deux des sections d'arbre de l'arbre de sortie.

L'invention a encore pour objet un engin roulant équipé de roues et d'un dispositif d'entraînement en rotation de roues dudit engin, caractérisé en ce que le dispositif d'entraînement en rotation de roues est du type précité.

### Brève description des dessins

L'invention sera bien comprise à la lecture de la description suivante d'exemples de réalisation, en référence aux dessins annexés dans lesquels :
[Fig. 1] représente une vue en perspective d'un engin roulant équipé d'un dispositif de transmission conforme à l'invention ;

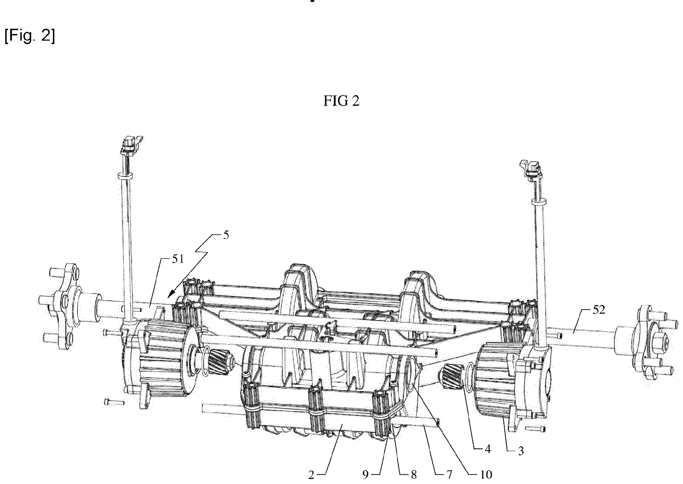

[Fig. 2] représente une vue partielle en perspective à l'état partiellement assemblé d'un dispositif de transmission conforme à l'invention ;
[Fig. 3] représente une vue partielle en perspective du boîtier d'un dispositif de transmission conforme à l'invention à l'état non fermé du boîtier ;

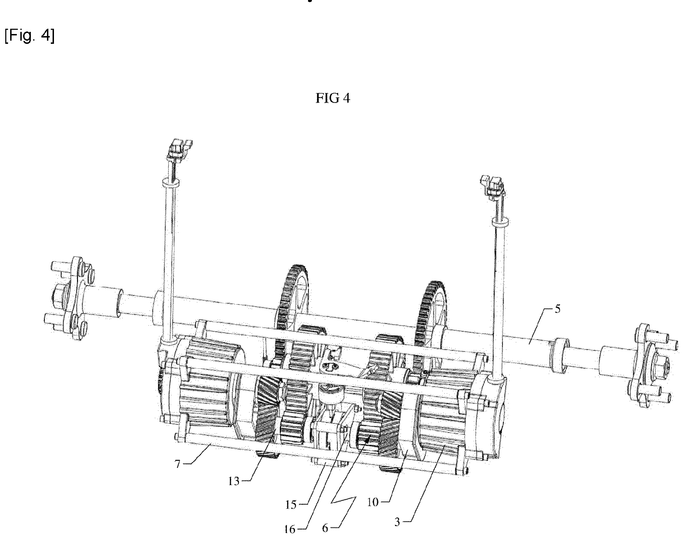

[Fig. 4] représente une vue partielle en perspective des éléments d'un dispositif de transmission conforme à l'invention, le boîtier ayant été omis pour alléger la vue ;

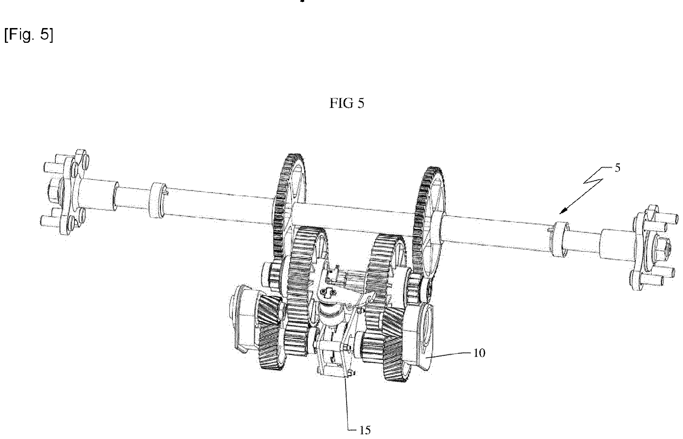

[Fig. 5] représente une vue partielle en perspective des éléments d'un dispositif de transmission conforme à l'invention, le boîtier ayant été omis pour alléger la vue ;
[Fig. 6] représente une vue en perspective d'un dispositif de transmission conforme à l'invention ;

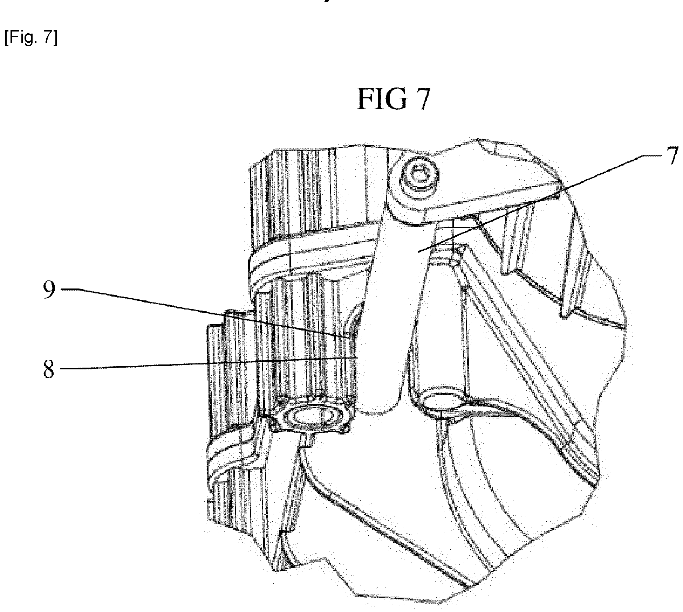

[Fig. 7] représente une vue de détail A de la figure 6 ;
[Fig. 8] représente une vue schématique à plat de la transmission de mouvement entre moteur et arbre de sortie d'un dispositif de transmission conforme à l'invention ;
[Fig. 9] représente une vue partielle en coupe d'un dispositif de transmission conforme à l'invention ;

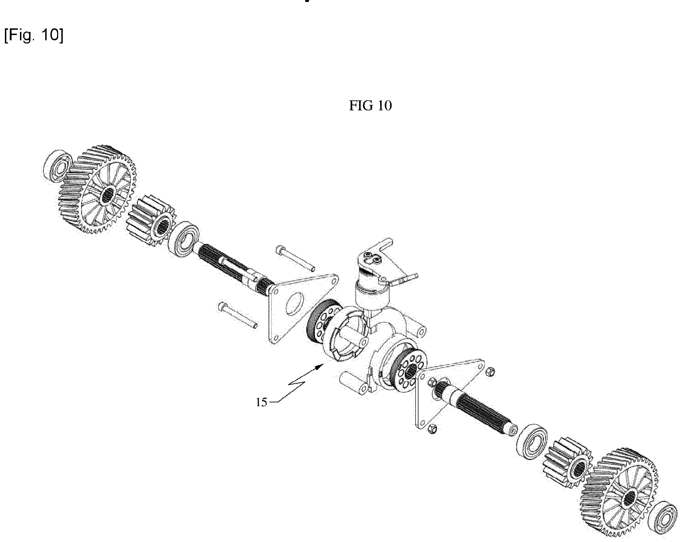

[Fig. 10] représente une vue en perspective en position éclatée des éléments le constituant du dispositif de freinage et de l'arbre rotatif associé.

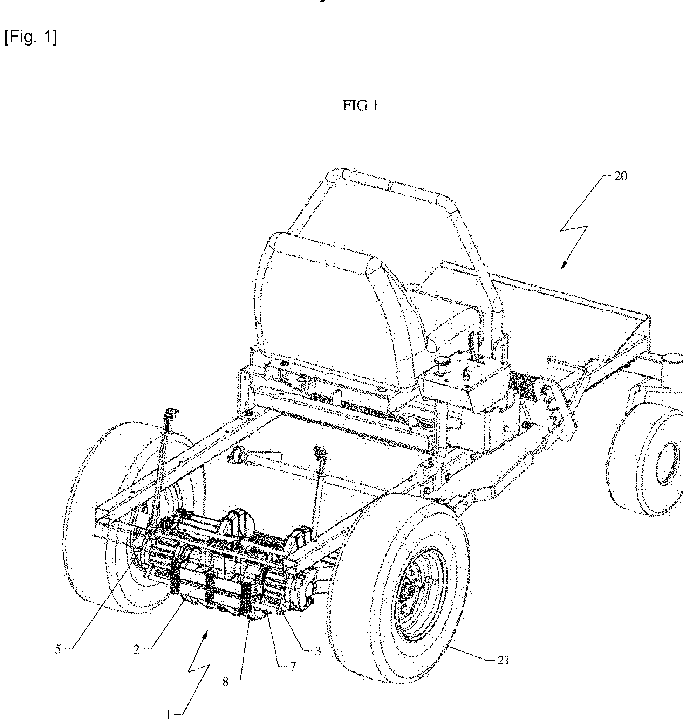

Le dispositif 1 de transmission, objet de l'invention, est plus particulièrement destiné à permettre l'entraînement en rotation de roues 21 d'un engin 20 roulant. Cet engin 20 roulant peut être du type de celui représenté à la figure 1. Cet engin 20 roulant est ici un engin roulant de tonte à quatre roues avec deux roues motrices arrière, dont l'entraînement en rotation s'opère à l'aide du dispositif 1 de transmission, objet de l'invention. Cet engin 20 roulant est un engin dit à rayon de braquage nul ou ZT (zéro turn) en raison de la commande des roues motrices pouvant être réalisée à l'aide du dispositif 1 de transmission qui sera décrit ci-après et de deux leviers de commande équipant ledit engin. Grâce à ces leviers de commande et à la conception du dispositif 1 de transmission, les roues motrices peuvent être entraînées en rotation dans des sens différents et à des vitesses de rotation différentes par actionnement desdits leviers de commande comme cela a été rappelé en introduction et comme cela est classique pour ce type d'engin.

Le dispositif 1 de transmission, pouvant encore être appelé boîte pont, comprend donc un boîtier 2 positionnable entre les roues de l'engin devant être entraînées en rotation par ledit dispositif 1 de transmission. Ce boîtier 2 est au moins partiellement en matière de synthèse. Dans l'exemple représenté, ce boîtier 2 est en polyamide chargé en fibres de verre.

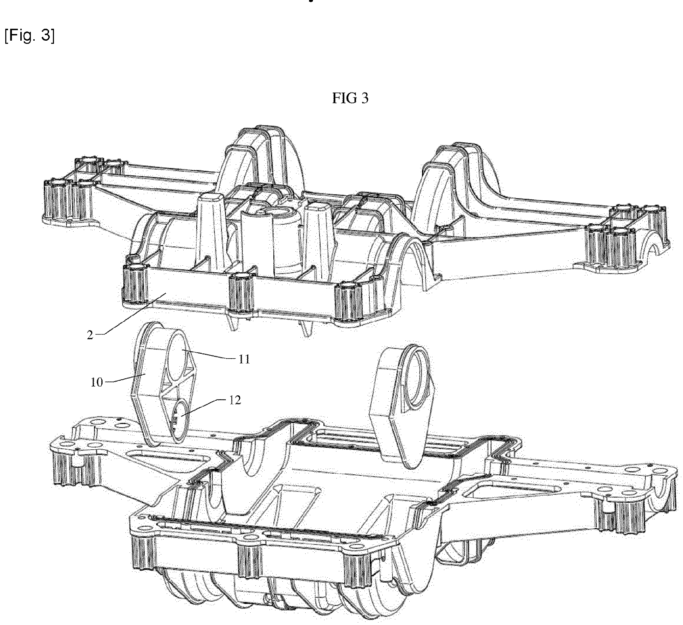

Ce boîtier 2 est formé de deux coquilles assemblées par un plan de joint comme illustré à la figure 3. Ce boîtier 2 délimite à l'état fermé, c'est-à-dire à l'état assemblé des coquilles, une enceinte à l'intérieur de laquelle sont logés au moins partiellement un certain nombre d'éléments. En particulier, un arbre 5 de sortie, qui forme ici, l'arbre d'entraînement de roues, en particulier des roues 21 arrière de l'engin 20, est logé partiellement à l'intérieur de la cavité délimitée par le boîtier 2.

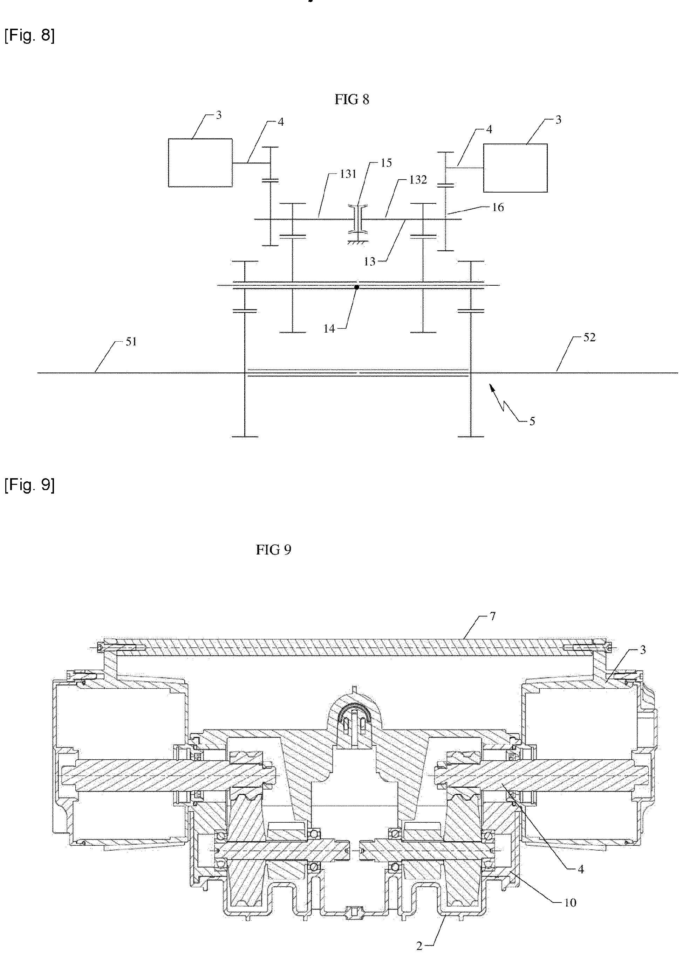

Dans les exemples représentés, cet arbre 5 de sortie est formé de deux sections 51, 52 d'arbre coaxiales montées libre en rotation l'une par rapport à l'autre. Ces deux sections 51 et 52 d'arbre sont reliées l'une à l'autre par un manchon, comme illustré à la figure 8, pour autoriser une telle indépendance en rotation.

Pour permettre l'entraînement en rotation de chaque section d'arbre 51, 52 de l'arbre 5 de sortie à des vitesses de rotation différentes et dans des sens de rotation différents, le dispositif 1 de transmission, objet de l'invention, comprend deux moteurs 3 électriques disposés à l'extérieur du boîtier 2. Chaque moteur 3 électrique est un moteur à deux sens de rotation. Chaque moteur 3 électrique est commandé par le conducteur de l'engin à l'aide d'un levier de commande équipant l'engin comme illustré à la figure 1 où les deux leviers de commande commandant l'un, l'un des moteurs, l'autre, l'autre des moteurs, sont visibles. L'actionnement de ces deux leviers est conforme à ce qui a été décrit ci-dessus pour les engins roulants à rayon de braquage nul. Chaque moteur 3 électrique est équipé d'un arbre 4 moteur faisant partiellement saillie à l'intérieur du boîtier 2 à travers une ouverture du boîtier 2 ménagée au niveau du plan de joint dudit boîtier 2. Ces arbres 4 moteurs sont coaxiaux ou parallèles entre eux.

Dans l'exemple représenté, à l'état associé au boîtier 2, les arbres 4 moteurs sont disposés de manière coaxiale, les ouvertures du boîtier à travers les arbres 4 moteurs font saillie s'étendant en regard l'une de l'autre.

Le dispositif 1 de transmission comprend encore un mécanisme 6 de transmission de mouvement configuré pour transmettre le mouvement de rotation de l'un des arbres 4 moteurs à l'une des sections d'arbre de l'arbre 5 de sortie et le mouvement de rotation de l'autre des arbres 4 moteurs à l'autre ou une autre des sections d'arbre de l'arbre 5 de sortie. Ces sections d'arbre sont représentées en 51 et 52 aux figures. Ce mécanisme 6 de transmission de mouvement, de même que l'arbre 5 de sortie, sont logés au moins partiellement à l'intérieur du boîtier 2.

Dans les exemples représentés, le mécanisme 6 de transmission de mouvement est un mécanisme de transmission de mouvement par engrenage. Ce mécanisme 6 de transmission de mouvement comprend un arbre 13, dit intermédiaire, sectionné présentant un premier tronçon 131 auquel le mouvement de rotation de l'un des arbres 4 moteurs est apte à être transmis et un deuxième tronçon 132 auquel le mouvement de rotation de l'autre desdits arbres 4 moteurs est apte à être transmis.

Le boîtier 2 comprend encore, au niveau de chaque arbre 4 moteur, logé à l'intérieur du boîtier 2, une pièce 10 munie d'au moins deux ouvertures formant l'une, représentée en 11 aux figures, un palier support dudit arbre 4 moteur, l'autre, représentée en 12 aux figures, un palier support de l'un des tronçons de l'arbre 13 intermédiaire sectionné du mécanisme 6 de transmission de mouvement. Cette pièce 10 est à nouveau une pièce en matière de synthèse. Cette pièce 10 est maintenue à l'intérieur du boîtier 2 par coopération de formes complémentaires entre la pièce 10 et le boîtier 2. Cette pièce 10 se présente ici sous forme d'une plaque avec l'une des ouvertures réalisée sous forme d'une ouverture borgne et l'autre ouverture sous forme d'une ouverture traversante. Cette pièce 10 est maintenue à l'intérieur du boîtier 2 par coopération de forme complémentaire entre la pièce 10 et le boîtier 2. Ainsi, par exemple, le boîtier 2 peut être muni intérieurement pour chaque pièce 10 d'une rainure à l'intérieur de laquelle la pièce 10 s'insère partiellement à emboîtement.

Dans les exemples représentés, le mécanisme 6 de transmission comprend un arbre 14 intermédiaire supplémentaire sectionné interposé entre l'arbre 13 intermédiaire auquel le mouvement de rotation des arbres 4 moteurs est transmis et l'arbre 5 de sortie. Ainsi, le premier tronçon 131 et le deuxième tronçon 132 de l'arbre 13 intermédiaire sont configurés pour transmettre via au moins une section de l'arbre 14 intermédiaire supplémentaire sectionné, leur mouvement de rotation à l'une des sections d'arbre de l'arbre 5 de sortie.

En variante, il aurait pu être prévu que le premier tronçon 131 et le deuxième tronçon 132 de l'arbre 13 intermédiaire soient configurés pour transmettre directement leur mouvement de rotation à l'une des sections d'arbre de l'arbre de sortie. Ainsi, comme l'illustre la figure 8, l'un des arbres moteurs transmet son mouvement de rotation au premier tronçon 131 de l'arbre 13 intermédiaire. Ce premier tronçon 131 transmet son mouvement de rotation à une section de l'arbre 14 supplémentaire, cette section de l'arbre 14 supplémentaire transmet elle-même son mouvement à la section d'arbre 51 de l'arbre 5 de sortie. La transmission s'opère de manière similaire avec l'autre arbre 4 moteur et le deuxième tronçon 132 de l'arbre 13 intermédiaire et la deuxième section de l'arbre intermédiaire supplémentaire 14 et la section d'arbre 52 de l'arbre 5 de sortie.

Dans la figure 8, le détail de ce mécanisme de transmission, qui peut affecter un grand nombre de formes, notamment en fonction du nombre d'étages de réduction est fourni. Dans l'exemple représenté, l'arbre 4 moteur de chaque moteur 3 est équipé d'un pignon. Ce pignon vient en prise par engrènement avec un pignon porté par un tronçon de l'arbre 13 intermédiaire. Ce tronçon d'arbre intermédiaire porte lui-même un pignon en prise permanente par engrènement avec un pignon porté par une section de l'arbre 14 intermédiaire supplémentaire sectionné. Cet arbre 14 intermédiaire supplémentaire porte un pignon en prise permanente avec une section de l'arbre 5 de sortie. En raison d'une réalisation sous forme de section des arbres intermédiaires ou intermédiaires supplémentaires, l'arbre 4 moteur de l'un des moteurs 3 transmet son mouvement de rotation à l'une des sections, par exemple la section 51 d'arbre de l'arbre de sortie de manière indépendante de l'arbre moteur 4 de l'autre des moteurs 3 qui lui-même transmet son mouvement de rotation à l'autre des sections, par exemple la section 52 d'arbre de l'arbre 5 de sortie.

Pour assurer une transmission de mouvement dans les meilleures conditions, les moteurs 3 sont reliés entre eux par au moins un élément 7 de liaison rapporté, distinct du boîtier 2. Le ou chacun de éléments de liaison s'étend d'un moteur à l'autre et forme un pont de liaison entre lesdits moteurs. Ce ou ces éléments 7 de liaison assurent le maintien d'un parallélisme ou d'une coaxialité des arbres 4 moteurs sans trop solliciter le boîtier 2. Dans l'exemple représenté, il est prévu plusieurs éléments de liaison, en l'occurrence trois éléments de liaison. Chaque élément 7 de liaison affecte la forme d'une tige de liaison. Cette tige s'étend parallèlement aux arbres 4 moteurs et est, à chacune de ses extrémités, fixée par vissage à une oreille radiale d'un moteur. Chaque moteur est ainsi équipé d'au moins trois oreilles radiales décalées de manière circonférentielle et les trois tiges s'étendent de manière parallèle entre elles autour desdits moteurs 4. Pour parfaire ce maintien relatif des moteurs 4, le dispositif 1 de transmission comprend encore au moins une butée 8 de limitation en déplacement en rotation de l'ensemble formé par les moteurs 3 et leurs éléments 7 de liaison autour d'un axe parallèle à au moins l'un des arbres 4 moteurs.

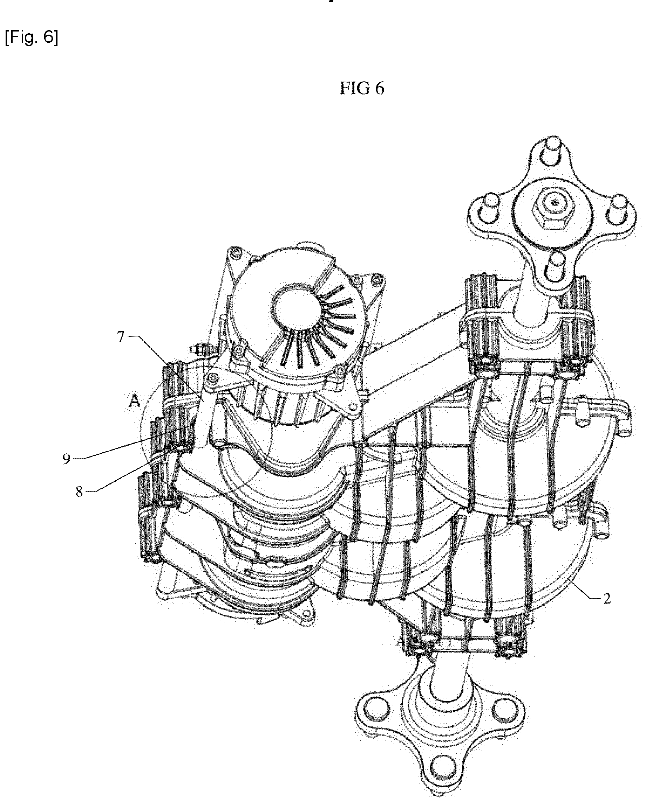

Dans les exemples représentés, chacune des butées 8 est formée par au moins une partie du boîtier 2 contre laquelle le ou au moins l'un des éléments 7 de liaison est apte à prendre appui. En particulier, le boîtier 2 est muni de plusieurs passages 9 traversants alignés à travers lesquels une tige de liaison peut s'insérer comme illustré à la figure 6. Ces passages peuvent être réalisés sous forme de trous ou d'encoches au niveau du boîtier 2. Ainsi, chaque butée 8 est formée par au moins une partie d'une surface de délimitation du ou d'au moins l'un des passages 9.

Pour parfaire l'ensemble, le dispositif 1 de transmission de mouvement comprend un dispositif 15 de freinage logé à l'intérieur du boîtier 2 et monté sur un arbre 16 rotatif. Dans les exemples représentés, le dispositif 15 de freinage comprend deux freins. Chaque frein est un frein à cônes comprenant deux pièces à surfaces coniques sensiblement coaxiales entourant l'arbre 16 équipé du dispositif de freinage et montées l'une, dite cône mâle, solidaire en rotation de l'une des sections d'arbre dudit arbre équipé du dispositif de freinage, l'autre, dite cône femelle, fixe en rotation par rapport audit arbre.

Pour sa solidarisation en rotation à l'une des sections de l'arbre équipé du dispositif 15 de freinage, chaque cône mâle est pourvu, au niveau de son évidement central, de cannelures axiales aptes à coopérer avec des cannelures complémentaires ménagées sur ladite section d'arbre.

Dans les exemples représentés, le cône femelle de l'un des freins et le cône femelle de l'autre frein affectent la forme d'une roue à alésage axial à portée conique. Le cône mâle de l'un des freins et le cône mâle de l'autre frein, de préférence de forme générale tronconique, sont évidés centralement pour pouvoir être enfilés l'un, sur l'une des sections d'arbre, l'autre, sur l'autre section des arbres de l'arbre 16 équipé du dispositif 15 de freinage.

Le cône femelle et le cône mâle de l'un des freins, de même que le cône femelle et le cône mâle de l'autre des freins sont commandés en déplacement relatif axial dans le sens d'un rapprochement ou d'un écartement par l'intermédiaire d'un organe de commande. A chaque fois, le cône mâle est, en position rapprochée des cônes mâle et femelle correspondant à l'état actif du frein, logé à l'intérieur de l'alésage axial du cône femelle avec sa surface périphérique externe conique en prise par contact d'appui avec la portée conique du cône femelle.

L'état inactif du frein correspond à la position écartée des cônes mâle et femelle du frein. L'organe de commande d'entraînement en déplacement des freins dans le sens d'un écartement l'un de l'autre pour le passage des freins d'un état actif à un état inactif est commun aux deux freins. Cet organe de commande est disposé entre les freins et monté mobile entre une position inactive et une position active de freinage pour le passage des freins d'un état inactif à un état actif.

Dans les exemples représentés, l'organe de commande est un organe de commande à déplacement angulaire affectant la forme d'une fourchette à deux branches. Chaque branche de la fourchette est munie d'une dent radiale interne formant la partie active de commande de l'organe de commande commun. Les roues constitutives des cônes femelles portent sur leurs faces en regard des dents formant une crénelure circulaire. Ces dents desdites crénelures s'interpénètrent en ménageant entre elles un espace libre d'insertion de la partie active de commande de l'organe de commande commun.

Dans l'exemple représenté, le corps de fourchette affecte la forme d'un C ou d'un U. Les branches dudit organe de commande sont formées par la zone jouxtant les extrémités libres du C ou des branches du U. A chaque fois, ces branches sont munies d'une dent radiale interne apte à venir se loger dans l'espace libre entre les flancs de deux dents des crénelures portées respectivement l'une par l'un des cônes femelles, l'autre par l'autre des cônes femelles.

Dans les exemples représentés, la fourchette est pourvue uniquement de deux dents radiales internes positionnées de manière diamétralement opposée sur l'organe de commande. Ces dents radiales internes se prolongent ici axialement et extérieurement audit organe de commande pour former deux tronçons d'arbre de section carrée ou circulaire. Ces tronçons d'arbre sont destinés à venir se loger à l'intérieur de paliers ménagés dans le boîtier 2.

L'organe de commande est déplaçable en rotation par l'intermédiaire d'un levier de commande positionné à l'extérieur du boîtier et venant en prise avec l'une des branches dudit organe de commande. Le déplacement angulaire de l'organe de commande provoque un écartement des cônes femelles. Cet écartement est obtenu par la venue en prise des surfaces actives des dents radiales internes de l'organe de commande le long des flancs des dents des crénelures des cônes femelles. On note que l'axe de rotation de l'organe de commande autorisant un déplacement angulaire de ce dernier s'étend sensiblement orthogonalement à l'axe autour duquel sont disposées, en disposition coaxiale, les surfaces coniques des cônes mâle et femelle, ce second axe correspondant à l'axe de rotation de l'arbre 16 équipé du dispositif 15 de freinage.

Le dispositif 15 de freinage comprend encore deux butées couplées mécaniquement entre elles et encadrant lesdits freins. Ces butées forment des butées de fin de course limitant le déplacement des freins dans le sens d'un écartement l'un de l'autre en position active de freinage de l'organe de commande. Ces butées forment un ensemble monté déplaçable axialement le long de l'arbre équipé du dispositif de freinage. Cet ensemble est désolidarisé en rotation dudit arbre 16. Ainsi, l'arbre 16 équipé du dispositif 15 de freinage peut tourner sans que l'ensemble formé par les butées ne tourne.

Cet ensemble formé par les butées peut être monté par rapport à l'arbre 16 équipé du dispositif 15 de freinage fixe en rotation ou limité en déplacement angulaire à l'intérieur du boîtier 2.

Indépendamment de leur conception, les butées, à l'état couplé, définissent entre elles un intervalle de longueur maximale fixe. Ces butées sont couplées l'une à l'autre par l'intermédiaire d'organes de liaison de type vis/écrou et maintenues à écartement l'une de l'autre par des entretoises montées sur les organes de liaison. Les entretoises peuvent affecter la forme de simples manchons. Chaque manchon est traversé par la vis constitutive de l'organe de couplage. Les butées affectent quant à elles chacune la forme d'une plaque munie d'un perçage traversant pour pouvoir être traversées par l'arbre 16 équipé du dispositif 15 de freinage. Les plaques sont ici réalisées triangulaires. Chaque entretoise s'étend donc entre les plaques. Dans le cas d'une entretoise sous forme de manchon, chaque extrémité du manchon peut être en contact d'appui avec la face de la plaque en regard de l'autre plaque. Des formes de type berceau sont ménagées dans le boîtier pour entourer partiellement les manchons entretoises et assurer l'immobilisation en rotation de l'ensemble formé par les butées à l'intérieur dudit boîtier.

L'arbre 16 rotatif équipé du dispositif 15 de freinage est formé d'au moins deux tronçons d'arbre portant chacun un frein. Cet arbre 16 rotatif peut être confondu avec l'arbre 5 de sortie ou avec l'arbre 13 intermédiaire ou l'arbre 14 intermédiaire supplémentaire du mécanisme 6 de transmission de mouvement. C'est cette seconde solution qui est illustrée. L'arbre 16 rotatif équipé du dispositif 15 de freinage est confondu avec l'arbre 13 supplémentaire du mécanisme 6 de transmission de mouvement.

Le fonctionnement du dispositif 15 de freinage est tel que suit. On suppose que l'arbre 16 équipé du dispositif 15 de freinage tourne et que chaque section dudit arbre transmet son mouvement de rotation à une section de l'arbre de sortie. On suppose que l'organe de commande est en position inactive. Le conducteur de l'engin commande donc, depuis son poste de commande, un déplacement angulaire de l'organe de commande. Lors de ce déplacement angulaire de l'organe de commande, le cône femelle de chaque frein tend à se rapprocher du cône mâle associé. En position extrême de rapprochement, la surface conique du cône mâle est, pour chaque frein, en contact d'appui avec la portée conique du cône femelle associé. Dans cette position, les surfaces coniques des cônes mâle et femelle sont en contact d'appui de sorte que l'arbre 16 est freiné. Pour permettre un desserrage des freins, il suffit de déplacer angulairement l'organe de commande dans une direction opposée. On note que le passage de la position freinée à la position desserrée des freins et inversement n'implique un déplacement axial que de quelques millimètres le long de l'arbre 16 des cônes femelles.

Pour assurer une coordination du fonctionnement des moteurs 3 électriques et du dispositif 1 de freinage, les moteurs 3 électriques sont associés à une unité de commande et l'unité de commande est configurée pour commander le passage de l'état marche à l'état arrêt desdits moteurs électriques en fonction de la position occupée par l'organe de commande d'entraînement en déplacement des freins. Ainsi, lorsque le conducteur de l'engin agit pour commander le déplacement angulaire de l'organe de commande d'entraînement en déplacement des freins dans le sens d'une activation des freins, un signal de commande est adressé en parallèle à l'unité de commande des moteurs 3 électriques pour commander l'arrêt des moteurs 3 électriques. On note que malgré la compacité du dispositif de freinage, les roues de l'engin peuvent être entraînées à des vitesses de rotation différentes et freinées.

## Revendications

1. Dispositif (1) de transmission notamment pour l'entraînement en rotation de roues (21) d'un engin (20) roulant, ledit dispositif (1) comprenant un boîtier (2), deux moteurs (3) électriques disposés à l'extérieur du boîtier (2) et équipés chacun d'un arbre (4) moteur faisant au moins partiellement saillie à l'intérieur du boîtier (2), un arbre (5) de sortie formé d'au moins deux sections (51, 52) d'arbre coaxiales et montées libres en rotation l'une par rapport à l'autre, un mécanisme (6) de transmission de mouvement configuré pour transmettre le mouvement de rotation de l'un des arbres (4) moteurs à l'une des sections (51, 52) d'arbre de l'arbre (5) de sortie et le mouvement de rotation de l'autre des arbres (4) moteurs à l'autre ou une autre des sections (51, 52) d'arbre de l'arbre (5) de sortie, le mécanisme (6) de transmission et l'arbre (5) de sortie étant logés au moins partiellement à l'intérieur du boîtier (2), le boîtier (2) étant au moins partiellement en matière de synthèse, **caractérisé en ce que** les moteurs (3) sont reliés entre eux par au moins un élément (7) de liaison rapporté et s'étendant d'un moteur (3) à l'autre pour former un pont de liaison entre lesdits moteurs (3) et **en ce que** le dispositif (1) de transmission comprend au moins une butée (8) de limitation en déplacement en rotation de l'ensemble formé par les moteurs (3) et le ou les éléments (7) de liaison autour d'un axe parallèle à au moins l'un des arbres (4) moteurs.

2. Dispositif (1) de transmission selon la revendication 1, **caractérisé en ce que** la ou au moins l'une des butées (8) est formée par au moins une partie du boîtier (2) contre laquelle le ou au moins l'un des éléments de liaison est apte à prendre appui.

3. Dispositif (1) de transmission selon l'une des revendications 1 ou 2, **caractérisé en ce que** le boîtier (2) est muni d'un ou plusieurs passages (9) traversants aptes à être traversés par le ou au moins l'un des éléments (7) de liaison et **en ce que** la ou au moins l'une des butées (8) est formée par au moins une partie d'une surface de délimitation du ou d'au moins l'un des passages (9).

4. Dispositif (1) de transmission selon l'une des revendications 1 à 3, **caractérisé en ce que** le ou au moins l'un des éléments (7) de liaison affecte la forme d'une tige de liaison.

5. Dispositif (1) de transmission selon l'une des revendications 1 à 4, **caractérisé en ce que** les arbres (4) moteurs sont coaxiaux ou parallèles entre eux.

6. Dispositif (1) de transmission selon l'une des revendications 1 à 5, **caractérisé en ce que** le mécanisme (6) de transmission de mouvement est un mécanisme de transmission de mouvement par engrenage.

7. Dispositif (1) de transmission selon l'une des revendications 1 à 6, **caractérisé en ce que** le mécanisme (6) de transmission de mouvement comprend un arbre (13) dit intermédiaire sectionné présentant un premier tronçon (131) auquel le mouvement de rotation de l'un des arbres (4) moteurs est apte à être transmis et un deuxième tronçon (132) auquel le mouvement de rotation de l'autre desdits arbres (4) moteurs est apte à être transmis et **en ce que** le boîtier (2) comprend, au niveau de chaque arbre (4) moteur, logée à l'intérieur du boîtier (2), une pièce (10) munie d'au moins deux ouvertures (11, 12) formant l'une (11), un palier support dudit arbre (4) moteur, l'autre (12), un palier support de l'un des tronçons de l'arbre (13) intermédiaire sectionné du mécanisme (6) de transmission de mouvement.

8. Dispositif (1) de transmission selon la revendication 7, **caractérisé en ce que** le premier tronçon (131) et le deuxième tronçon (132) de l'arbre (13) intermédiaire sont configurés chacun pour transmettre directement ou via au moins une section d'un arbre (14) intermédiaire supplémentaire sectionné leur mouvement de rotation à l'une des sections d'arbre de l'arbre (5) de sortie.

9. Dispositif (1) de transmission selon l'une des revendications 1 à 8, **caractérisé en ce qu'**il comprend un dispositif (15) de freinage logé à l'intérieur du boîtier (2) et monté sur un arbre (16) rotatif.

10. Engin (20) roulant équipé de roues (21) et d'un dispositif (1) d'entraînement en rotation de roues dudit engin (20), **caractérisé en ce que** le dispositif (1) d'entraînement en rotation de roues est conforme à l'une des revendications 1 à 9.

## Patentansprüche

1. Übertragungsvorrichtung (1) insbesondere für den Drehantrieb von Rädern (21) einer rollenden Maschine (20), die Vorrichtung (1) umfassend ein Gehäuse (2), zwei Elektromotoren (3), die außerhalb des Gehäuses (2) angeordnet sind und jeweils mit einer Motorwelle (4) ausgerüstet sind, die zumindest teilweise in das Innere des Gehäuses (2) hineinragt, und eine Ausgangswelle (5), die aus mindestens zwei Wellenabschnitten (51, 52) gebildet ist, die koaxial und frei drehend in Bezug aufeinander montiert sind, einen Bewegungsübertragungsmechanismus (6), der konfiguriert ist, um die Drehbewegung von einer der Motorwellen (4) auf einen der Wellenabschnitte (51, 52) der Ausgangswelle (5) und die Drehbewegung von der anderen der Motorwellen (4) auf den anderen oder einen anderen der Wellenabschnitte (51, 52) der Ausgangswelle (5) zu übertragen, der Übertragungsmechanismus (6) und die Ausgangswelle (5) zumindest teilweise innerhalb des Gehäuses (2) untergebracht sind, wobei das Gehäuse (2) zumindest teilweise aus synthetischem Material ist, **dadurch gekennzeichnet, dass** die Motoren (3) durch mindestens ein aufgestecktes Verbindungselement (7) miteinander verbunden sind, das sich von einem Motor (3) zum anderen erstreckt, um eine Verbindungsbrücke zwischen den Motoren (3) zu bilden, und dass die Übertragungsvorrichtung (1) mindestens einen Begrenzungsanschlag (8) der Drehbewegung der von den Motoren (3) und dem oder den Verbindungselementen (7) gebildeten Einheit um eine Achse parallel zu mindestens einer der Motorwellen (4) umfasst.

2. Übertragungsvorrichtung (1) nach Anspruch 1, **dadurch gekennzeichnet, dass** der oder mindestens einer der Anschläge (8) von mindestens einem Teil des Gehäuses (2) gebildet ist, an dem das oder mindestens eines der Verbindungselemente anliegen kann.

3. Übertragungsvorrichtung (1) nach einem der Ansprüche 1 oder 2, **dadurch gekennzeichnet, dass** das Gehäuse (2) mit einem oder mehreren durchgehenden Durchgängen (9) versehen ist, die geeignet sind, um von dem oder mindestens einem der Verbindungselemente (7) durchquert zu werden, und dass der oder mindestens einer der Anschläge (8) durch mindestens einen Teil einer Begrenzungsfläche des oder mindestens eines der Durchgänge (9) gebildet ist.

4. Übertragungsvorrichtung (1) nach einem der Ansprüche 1 bis 3, **dadurch gekennzeichnet, dass** das oder mindestens eines der Verbindungselemente (7) die Form eines Verbindungsstabs annimmt.

5. Übertragungsvorrichtung (1) nach einem der Ansprüche 1 bis 4, **dadurch gekennzeichnet, dass** die Motorwellen (4) koaxial oder parallel zueinander sind.

6. Übertragungsvorrichtung (1) nach einem der Ansprüche 1 bis 5, **dadurch gekennzeichnet, dass** der Bewegungsübertragungsmechanismus (6) ein Bewegungsübertragungsmechanismus durch Zahnräder ist.

7. Übertragungsvorrichtung (1) nach einem der Ansprüche 1 bis 6, **dadurch gekennzeichnet, dass** der Bewegungsübertragungsmechanismus (6) eine sogenannte unterteilte Zwischenwelle (13) umfasst, die ein erstes Teilstück (131) aufweist, auf das die Drehbewegung einer der Antriebswellen (4) übertragen werden kann, und ein zweites Teilstück (132), auf das die Drehbewegung der anderen der Antriebswellen (4) übertragen werden kann, und dass das Gehäuse (2), auf Höhe jeder Antriebswelle (4), die im Inneren des Gehäuses (2) untergebracht ist, ein Teil (10) umfasst, das mit mindestens zwei Öffnungen (11, 12) versehen ist, wovon die eine (11) ein Stützlager der genannten Antriebswelle (4) und die andere (12) ein Stützlager eines der Teilstücke der unterteilten Zwischenwelle (13) des Bewegungsübertragungsmechanismus (6) bildet.

8. Übertragungsvorrichtung (1) nach Anspruch 7, **dadurch gekennzeichnet, dass** das erste Teilstück (131) und das zweite Teilstück (132) der Zwischenwelle (13) jeweils konfiguriert sind, um ihre Drehbewegung direkt oder über mindestens einen Abschnitt einer weiteren unterteilten Zwischenwelle (14) auf einen der Wellenabschnitte der Ausgangswelle (5) zu übertragen.

9. Übertragungsvorrichtung (1) nach einem der Ansprüche 1 bis 8, **dadurch gekennzeichnet, dass** sie eine Bremsvorrichtung (15) umfasst, die im Inneren des Gehäuses (2) untergebracht und auf einer drehenden Welle (16) montiert ist.

10. Rollende Maschine (20), die mit Rädern (21) und einer Vorrichtung (1) zum Drehantrieb von Rädern der Maschine (20) ausgerüstet ist, **dadurch gekennzeichnet, dass** die Vorrichtung (1) zum Drehantrieb von Rädern einem der Ansprüche 1 bis 9 entspricht.

## Claims

1. A transmission device (1), in particular for rotating wheels (21) of a wheeled vehicle (20), said device (1) comprising a housing (2), two electric motors (3) positioned outside the housing (2) and each provided with a drive shaft (4) at least partially protruding inside the housing (2), an output shaft (5) made up of at least two coaxial shaft sections (51, 52) mounted free to rotate relative to each other, a mechanism (6) for transmitting motion configured to transmit the rotational motion of one of the drive shafts (4) to one of the shaft sections (51, 52) of the output shaft (5) and the rotational motion of the other drive shaft (4) to the other or another shaft section (51, 52) of the output shaft (5), the transmission mechanism (6) and the output shaft (5) being at least partially accommodated inside the housing (2), the housing (2) being at least partially made from a synthetic material, **characterized in that** the motors (3) are connected to each other by at least one add-on connecting element (7) extending from one motor (3) to the other to form a connecting bridge between said motors (3), and **in that** the transmission device (1) comprises at least one stop (8) for limiting the rotational movement of the assembly formed by the motors (3) and the connecting element(s) (7) about an axis parallel to at least one of the drive shafts (4).

2. The transmission device (1) as claimed in claim 1, **characterized in that** the or at least one of the stops (8) is formed by at least part of the housing (2) against which the or at least one of the connecting elements is able to rest.

3. The transmission device (1) as claimed in one of claims 1 and 2, **characterized in that** the housing (2) is provided with one or more through-passages (9) through which the or at least one of the connecting elements (7) can pass, and **in that** the or at least one of the stops (8) is formed by at least part of a surface defining the or at least one of the passages (9).

4. The transmission device (1) as claimed in one of claims 1 to 3, **characterized in that** the or at least one of the connecting elements (7) takes the form of a connecting rod.

5. The transmission device (1) as claimed in one of claims 1 to 4, **characterized in that** the drive shafts (4) are of coaxial with or parallel to each other.

6. The transmission device (1) as claimed in one of claims 1 to 5, **characterized in that** the motion transmission mechanism (6) is a geared motion transmission mechanism.

7. The transmission device (1) as claimed in one of claims 1 to 6, **characterized in that** the motion transmission mechanism (6) comprises a so-called split intermediate shaft (13) having a first section (131) to which the rotational motion of one of the drive shafts (4) can be transmitted and a second section (132) to which the rotational motion of the other of said drive shafts (4) can be transmitted, and **in that** the housing (2) comprises, level with each drive shaft (4), accommodated inside the housing (2), a part (10) provided with at least two openings (11, 12), one (11) of which forms a support bearing for said drive shaft (4) and the other (12) a support bearing for one of the sections of the split intermediate shaft (13) of the motion transmission mechanism (6).

8. The transmission device (1) as claimed in claim 7, **characterized in that** the first section (131) and the second section (132) of the intermediate shaft (13) are each configured to transmit their rotational motion to one of the shaft sections of the output shaft (5) directly or via at least one section of an additional split intermediate shaft (14).

9. The transmission device (1) as claimed in one of claims 1 to 8, **characterized in that** it comprises a braking device (15) accommodated inside the housing (2) and mounted on a rotating shaft (16).

10. A wheeled vehicle (20) provided with wheels (21) and a device (1) for rotating wheels of said vehicle (20), **characterized in that** the device (1) for rotating wheels is as claimed in one of claims 1 to 9.
